# FASCICULE DE BREVET EUROPEEN

(11) **EP 0 963 259 B1**
(45) Date de publication et mention de la délivrance du brevet: **23.01.2002**
(21) Numéro de dépôt: 98951550.7
(22) Date de dépôt: 26.10.1998
(51) Int. Cl.: B05D 5/06, F16L 59/08

(54) **REFLECTEURS SOLAIRES**
SOLARREFLEKTOR
SOLAR REFLECTORS

(30) Priorité: 27.10.1997 FR 9713446
(43) Date de publication de la demande: 15.12.1999
(73) Titulaire: CENTRE NATIONAL D'ETUDES SPATIALES, 75001 Paris (FR)
(72) Inventeur: GUILLAUMON, Jean-Claude, F-31450 Ayguesvives (FR); NABARRA, Pascale, Véronique, F-31450 Baziege (FR)
(74) Mandataire: Colas, Jean-Pierre
(86) Numéro de dépôt international: FR9802283
(87) Numéro de publication internationale: WO9921661

(56) Documents cités:
- EP-A- 0 374 495
- FR-A- 2 033 461
- GB-A- 2 067 582
- US-A- 4 942 083
- DATABASE WPI Section Ch, Week 9401 Derwent Publications Ltd., London, GB; Class A26, AN 94-002739 XP002072385 & JP 05 313391 A (KONICA CORP)
- DATABASE WPI Section Ch, Week 9401 Derwent Publications Ltd., London, GB; Class A26, AN 94-002738 XP002072386 & JP 05 313390 A (KONICA CORP)

## Description

Le contrôle thermique de véhicules spatiaux fait appel à différentes techniques, à savoir le contrôle actif ou le contrôle passif.

Le contrôle actif utilise des machines thermiques ou des systèmes permettant le transfert de l'énergie thermique d'un point à un autre. Le contrôle passif se fait à l'aide de matériaux de revêtement ayant des propriétés thermo-optiques, telles que le coefficient d'absorption solaire αs et le facteur d'émissivité infra-rouge ε, bien déterminées.

On distingue trois catégories de matériaux de revêtement :
- les matériaux de revêtement froids : α faible, ε élevé : αs/ε < 1 (par ex. peintures blanches, SSM, OSR) ;
- les matériaux de revêtement moyens : αs ≈ ε ≈ 0,3 αs/ε ≈ 1 (par ex. peintures aluminium, métaux) ;
- les matériaux de revêtement chauds : αs élevé, ε élevé avec α/ε > 1 (par ex. peintures noires, absorbeurs solaires).

En ce qui concerne les matériaux de revêtement froids, les SSM (Second Surface Miror) sont constitués d'un film polymérique métallisé et les OSR (Optical Surface Reflector) d'une plaquette de quartz ou de verre métallisée.

Les films polymériques des SSM sont habituellement constitués de Teflon® FEP (copolymère de tétrafluoroéthylène et d'hexafluoropropylène) de DU PONT DE NEMOURS, de Mylar® (polyester) de DU PONT DE NEMOURS ou de Kapton® (polyimide) de DU PONT DE NEMOURS, métallisés à l'aide d'aluminium ou d'argent. Les plus performants sont les SSM du type Teflon® FEP/Al ou Teflon® FEP/Ag. Les OSR sont habituellement constitués d'une plaquette, de 100 micromètres dépaisseur, de quartz très pur ou de verre dopé au cérium, métallisée.

Les propriétés thermo-optiques des SSM et OSR sont imparties :
- pour le facteur d'absorption solaire, par le métal déposé (aluminium, αs ≈ 0,10 ; argent, αs ≈ 0,08). L'absorption solaire sera d'autant meilleure que le film polymérique ou le quartz sera plus transparent.
- pour l'émissivité infra-rouge, par le film polymérique ou la plaquette de quartz. Dans le cas du film polymérique l'émissivité est fonction de l'épaisseur (par exemple pour le Teflon® FEP, ε = 0,48 pour e = 25µm et ε = 0,75 pour e = 125 µm).

La masse surfacique des SSM et des OSR est élevée compte tenu de la densité du Teflon® FEP (d = 2,24) dans le cas des SSM ou du quartz (d = 2,20) dans les cas des OSR. Le coût de ces matériaux est très élevé, surtout dans le cas des OSR car le dépôt métallique sous vide ne peut être réalisé que sur des petites surfaces (typiquement 5 x 5 cm).

A cela s'ajoute dans le cas d'une application de ces matériaux de revêtement sur un engin spatial, la pose (par collage) des SSM et OSR (emploi d'outillages spéciaux très coûteux).

Il existe donc un besoin pour des matériaux de revêtement de contrôle thermiques performants, plus légers et de moindre coût que les matériaux de revêtement actuels.

L'invention vise à satisfaire ce besoin.

Plus particulièrement, l'invention concerne un matériau de revêtement pour le contrôle thermique comportant une couche réflectrice métallique supportée ou non par un substrat, caractérisé en ce que la couche réflectrice métallique est revêtue d'une couche protectrice transparente en polysiloxane dont la structure est constituée de blocs bi- ou tri-dimensionnels reliés entre eux par des chaînes linéaires ou par des groupes de liaison, ladite couche protectrice étant exempte de groupements chromophores susceptibles d'absorber dans l'ultra-violet au-dessus de 170 nm.

Cette couche doit posséder une très bonne transparence de façon à ne pas affecter le coefficient d'absorption solaire de la couche métallique, une bonne émissivité infrarouge et une certaine souplesse surtout lorsque le substrat est lui-même souple.

US 4 942 083 montre un matériau selon le préambule de la revendication 1.

Pour produire le matériau de l'invention, on dépose, par une méthode quelconque, une couche de polysiloxane ayant une très grande transparence (taux de transmission ≥ 98% entre 200 et 1000 nm) et une densité proche de 1, sur une mince couche métallique brillante (aluminium ou argent, par exemple) qui peut être massique (par exemple d'une épaisseur de 25 à 100 µm) ou préalablement déposée sur un substrat. Le substrat peut être souple ou rigide, mais est de préférence souple.

Le polysiloxane formant la couche transparente est un polysiloxane dont la structure comporte des blocs bi- ou tri-dimensionnels reliés entre eux par des chaînes linéaires plus ou moins longues selon le degré de souplesse désiré. Un polysiloxane entièrement bi- ou tri-dimensionnel serait rigide et cassant et ne conviendrait pas pour l'application envisagée. En variante, les blocs bi- ou tri-dimensionnels peuvent être reliés entre eux par des groupes de liaison, tels que -O-, - 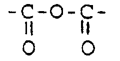 et autres, résultant de la réaction ou de la condensation de deux groupes fonctionnels. Les polysiloxanes utiles ici ont une structure s'apparentant aux modèles suivants :

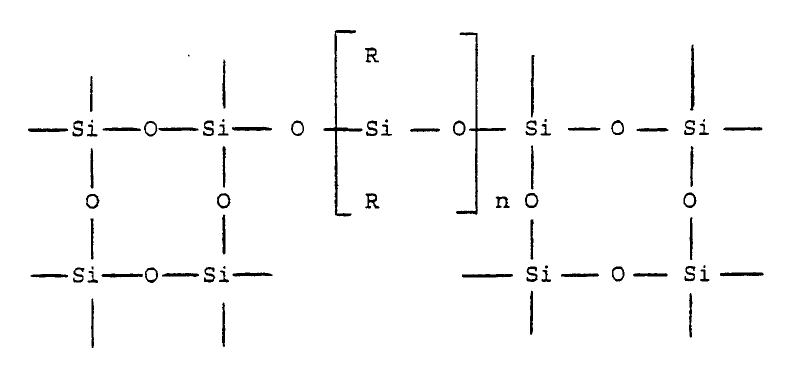

### Structure tridimensionnelle

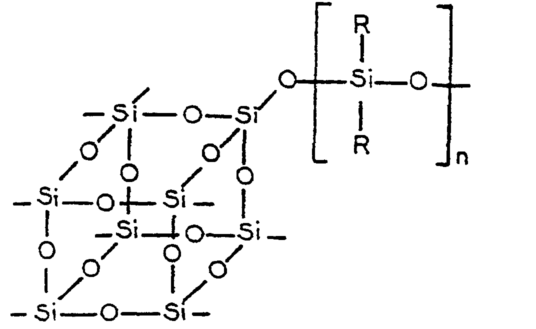

où R est un radical alkyle, de préférence un radical méthyle, et n = 0, 1, 2, 3 pour des structures moyennement rigides pour des applications sur des substrats métalliques massiques et n ≥ 4 pour des applications sur des substrats flexibles métallisés.

Les chaînes linéaires reliant les blocs bi- ou tri-dimensionnels sont en général des chaînes polydiméthylsiloxanes.

La couche protectrice ne doit pas comporter de groupements chromophores susceptibles d'absorber dans l'ultra-violet au-dessus de 170 nm, que ces groupements soient présents dans le polysiloxane ou proviennent de catalyseurs ou d'agents de réticulation.

En effet, la présence de tels groupements entraînerait des dégradations de la couche protectrice sous le rayonnement ultra-violet de l'espace avec pour résultat une altération de la transparence et des propriétés thermo-optiques, notamment du facteur d'absorption solaire (αs).

Les groupements chromophores à éviter sont notamment les groupements

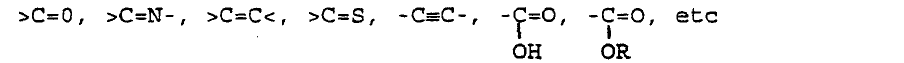

Pour obtenir les structures polymères définies plus haut, plusieurs voies sont possibles :
1) par utilisation de polysiloxanes ayant des structures bi- ou tri-dimensionnelles et comportant des radicaux pouvant soit coréagir entre eux, soit être réticulés avec des polydiméthylsiloxanes de façon à créer des chaînes linéaires entre les blocs bi- ou tri-dimensionnels.
2) à partir d'un polysiloxane de formule 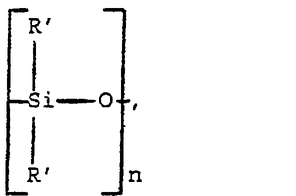
dans lequel R' est un groupement réactionnel, qui permet la co-réticulation et la réaction avec des groupements réactionnels d'autres polydiméthylsiloxanes.

La polymérisation peut se faire par polyaddition ou par polycondensation selon les groupements réactionnels utilisés, en présence de catalyseurs ou non et à température ambiante ou élevée (jusqu'à 250°C).

Des schémas réactionnels possibles sont les suivants :

### Système 1 :

- autoréticulation
   bidimensionnel 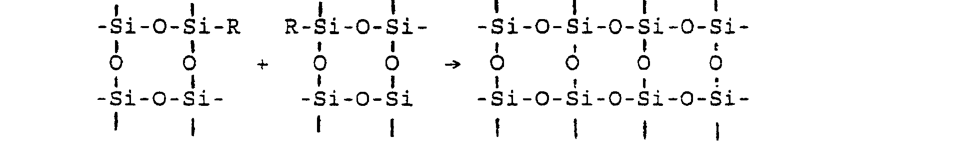
ou tridimensionnel 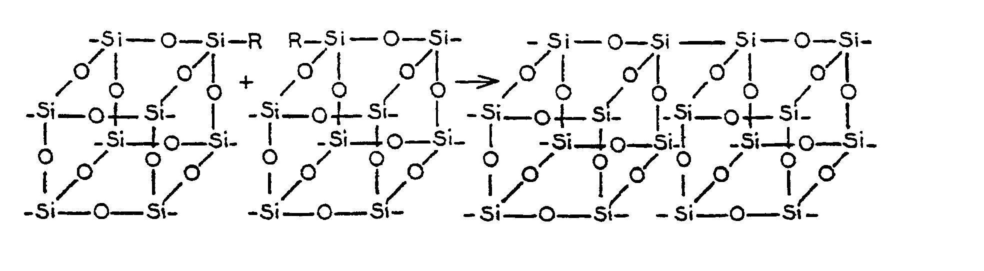
- Réticulation avec polydiméthylsiloxanes :
   bidimensionnel 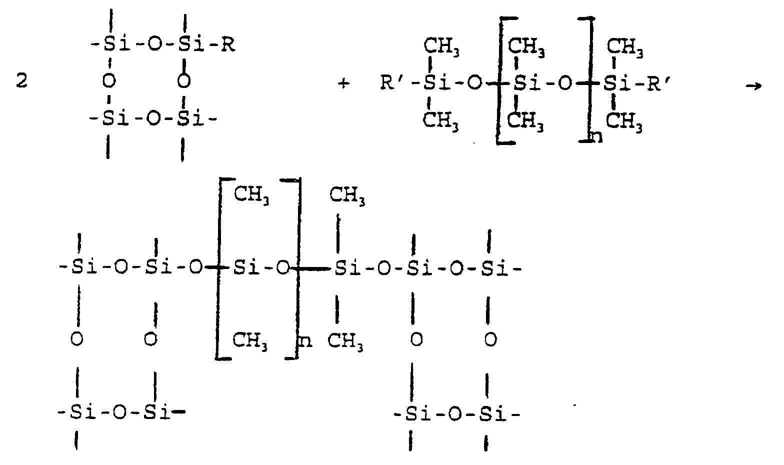 tridimensionnel 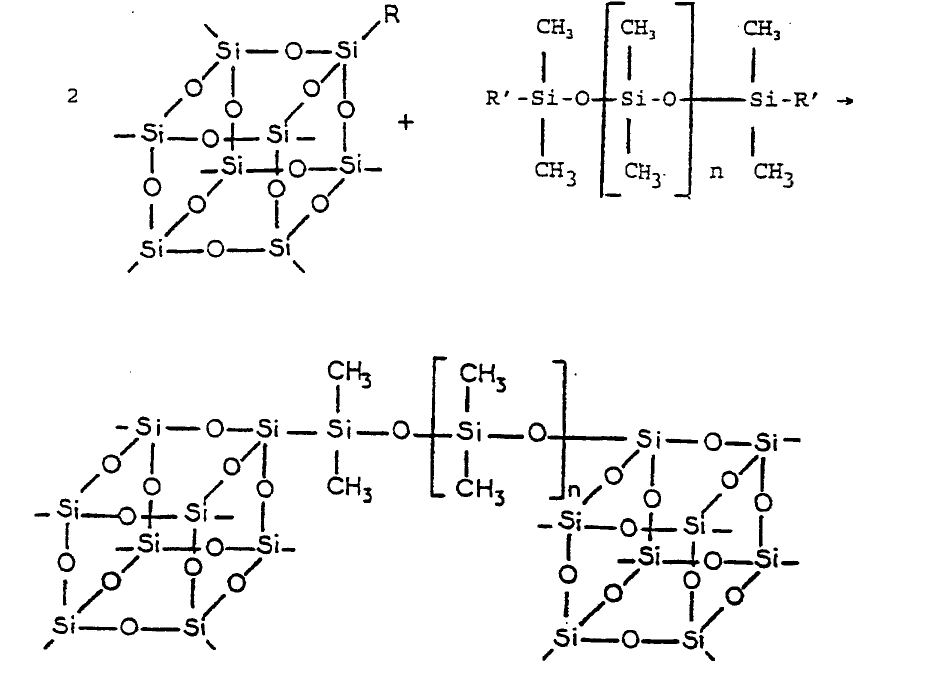
où R et R' sont des groupements réactionnels et n est un nombre entier égal ou supérieur à 1.

### Système 2 :

- autoréticulation 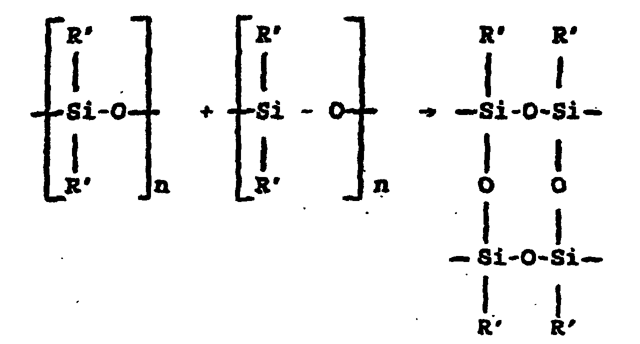
- réticulation avec polydiméthylsiloxanes 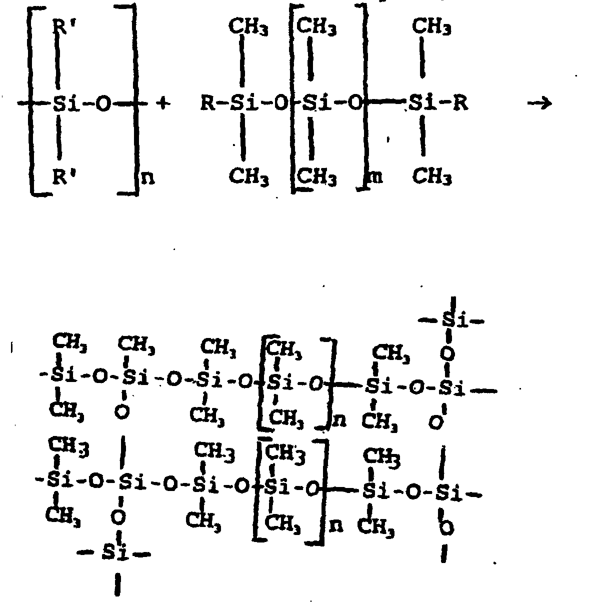
où R et R' sont des groupements réactionnels et n et m sont 35des nombres entiers, égaux ou différents, égaux ou supérieurs à 1.

Dans le cas du système 2 les produits sont plus souples car ils comportent plus de chaînes polysiloxaniques que dans le cas du système 1.

D'autre part, plus les chaînes polysiloxaniques seront 5 courtes, plus les revêtements obtenus seront rigides.

Enfin, l'usage de réticulants permet d'augmenter le nombre de structures bi- et tri-dimensionnelles.

Nous donnons ci-après une liste non-exhaustive de comonomères qui peuvent être utilisés dans le cadre du système 1 :
- polysilsesquioxanes du type 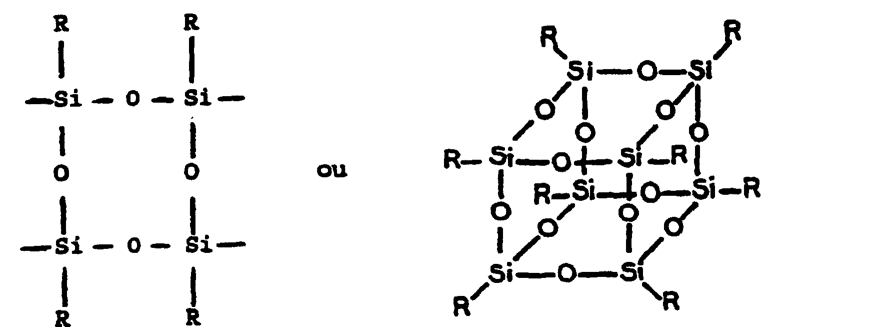 avec des groupes réactionnels tels que -H, -CH=CH₂, -OH, -Cl. -Br, -O-Me, -O-Et, -O-Ac, -N-Me₂, -O-N=CR₂, etc...
- polysiloxanes à structure tridimensionnelle du type : 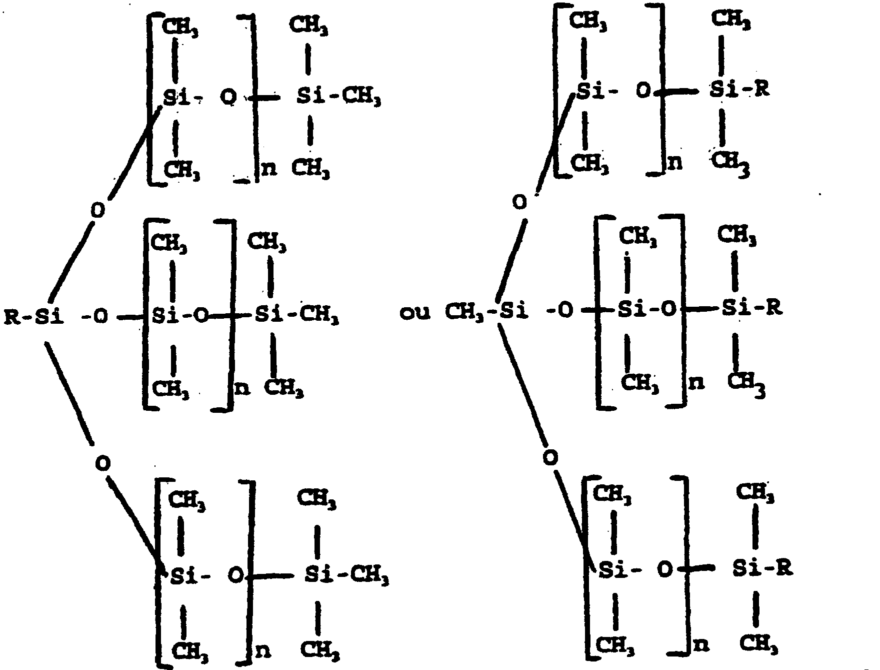 avec R=-H, -CH=CH₂, -OH, -Cl, -Br, -Ome₂, -O-Et, -O-Ac, -N-Me₂, - O-N=CR₂, etc...
- polydiméthylsiloxanes avec des groupements réactionnels aux extrémités de la chaîne du type -H, -CH=CH₂, -OH, -Cl,-Br, -O-Me, -O-Et, -O-Ac, -N-Me₂, -O-N=CR₂, etc...

On peut faire varier les proportions de chaque constituant selon qu'on désire un produit plus ou moins souple. Ces proportions peuvent varier entre 10 et 90% en poids pour les polysiloxanes à structure bi- ou tridimensionnelle ou les polydiméthylsiloxanes avec groupements réactionnels, les autres constituants formant le complément à 100%.

Dans le cadre du système 2, on peut citer, de façon non limitative, les comonomères suivants :
- polydiéthoxysiloxane, polydiméthoxysiloxane
- polydiméthylsiloxanes avec des groupements réactionnels aux extrémités de la chaîne ou dans la chaîne du type :-H, -CH=CH₂, -OH, -Cl, -Br, -O-Me, -O-Et, -O-Ac, -N-Me₂, -O-N=CR₂, etc...
- réticulant du type : diméthyldiacétoxysilane, vinylméthyldiacétoxysilane, éthyltriacétoxysilane, méthyltriacétoxysilane, vinyltriacétoxysilane, tétraacétate de silicium, diméthyldiéthoxysilane, 1,1,3,3-tétraméthyl-1,3-diéthoxydisiloxane, méthyltriéthoxysilane, méthyltriméthoxysilane, diméthyltétraméthoxydisiloxane, tétraéthoxysilane, tétraméthoxysilane, tétrapropoxysilane, bis(N-méthylbenzylamido)-éthoxyméthylsilane, bis(diméthylamino)diméthylsilane, bis(diméthylamino)méthylvinylsilane.

Les proportions entre les différents comonomères peuvent varier selon les produits désirés. Elles peuvent être comprises entre 5 et 40% pour les polyalcoxysiloxanes, 10 à 90% pour les diméthylsiloxanes à groupements réactionnels et entre 0 et 20% pour les réticulants.

Dans le cas d'une polymérisation à température ambiante, pour les deux systèmes, on peut utiliser des catalyseurs, ou des mélanges de catalyseurs, dans des proportions de 0,01 à 5% en poids par rapport au mélange. Une liste non limitative de ces catalyseurs est la suivante:
- sels d'étain tels que : diacétate de dibutyl-étain, dilaurate de dibutyl-étain, octoate d'étain, dioctoate de dibutyl-étain, tétrabutyl-étain, diméthoxydibutyl-étain, etc...
- sels de zinc, octoate de zinc, acétate de zinc, etc...
- composés de titane : tétrabutyl-titanate, tétraéthyltitanate, tétraoctyltitanate, tétraméthyltitanate, tétra n-propyltitanate, etc...
- complexes de platine avec le divinyltétraméthyldisiloxane, le cyclovinylméthylsiloxane, etc...

La couche protectrice doit être appliquée sur une surface de métal polie de façon à obtenir des coefficients d'absorption solaire faible.

Plus particulièrement, il s'agit d'aluminium ou d'argent poli sous forme de dépôt effectué sous vide sur des substrats flexibles (cas des réflecteurs solaires flexibles) ou rigides (équivalent des OSR : Optical Solar Reflector).

Les substrats flexibles sont des films polymériques tels que les polyimides (KAPTON®), les polyesters (MYLAR®, TERPHANE®, etc...) les polyéthylènes, les polypropylènes, les polysulfones, etc..., dont l'épaisseur est typiquement comprise entre 3 et 50 µm, mais aussi des films de métaux de faible épaisseur (par exemple 10 à 50µm).

Les substrats rigides peuvent être des feuilles de métaux polis (aluminium ou argent) de faible épaisseur, par exemple de 50 à 100 µm ou des substrats avec des dépôts métalliques réalisés sous vide (verre, quartz, matières céramiques, etc...).

La couche protectrice de l'invention peut être appliquée en une épaisseur de, par exemple, 40 à 50 µm de façon à obtenir une émissivité infra-rouge élevée (0,75 à 0,85). Ces revêtements peuvent être appliqués en une ou plusieurs couches.

Si désiré ou nécessaire les revêtements de l'invention peuvent être appliqués sur une couche de primaire. 5 Egalement, les compositions de revêtement utilisées dans l'invention peuvent être diluées avant application, à un taux de matières sèches de 1 à 80% en poids, à l'aide d'un solvant tel que les suivants : des hydrocarbures aliphatiques, par exemple hexane, heptane, octane, cyclohexane, etc..., des hydrocarbures aromatiques, par exemple benzène, toluène, xylène, styrène, etc..., des hydrocarbures halogénés, par exemple trichloroéthylène, chlorure de méthyle, chloroforme, etc... ou des mélanges de ces composants.

L'application de la couche protectrice peut se faire au pistolet à peinture, à la brosse ou par toute autre technique connue.

Les exemples non limitatifs suivants sont donnés en vue d'illustrer l'invention.

### EXEMPLE 1

Le mélange obtenu à partir de polydiéthoxysiloxane (3 parties en poids), de polydiméthylsiloxane avec terminaisons silanol (7 parties en poids), de tétraméthyldiéthoxydisiloxane (4 parties en poids) et de diacétate de dibutyl-étain (0,014 partie en poids) est appliqué, au pistolet, sur un substrat formé de KAPTON aluminisé, en une épaisseur de 50 micromètres.

Les propriétés thermo-optiques sont :
αs (coefficient d'absorption solaire) = 0,10
ε (émissivité infra-rouge) = 0,80
la transmission du revêtement entre 200 et 1000 nm est de 99%.

### EXEMPLE 2

Le mélange obtenu à partir de polydiéthoxysiloxane (3 parties en poids), de polydiméthylsiloxane avec terminaisons silanol (4 parties en poids), de tétraméthyldiéthoxydisiloxane (4 parties en poids) et de diacétate de dibutyl-étain (0,014 partie en poids) est appliqué, au pistolet, sur un substrat formé de KAPTON aluminisé, en une épaisseur de 50 micromètres.

Les propriétés thermo-optiques sont :
αs = 0,10, ε = 0,82, transmission du revêtement entre 200 et 1000 nm = 99,5%.

### EXEMPLE 3

Le mélange obtenu à partir de polydiéthoxysiloxane (3 parties en poids), de polydiméthylsiloxane avec terminaisons silanol (7 parties en poids), de tétraméthyldiéthoxydisiloxane (2 parties en poids) et de dibutyldiacétate d'étain (0,012 partie en poids) est appliqué, au pistolet, sur un substrat formé de KAPTON aluminisé, en une épaisseur de 50 micromètres, puis polymérisé 24 heures à 100°C.

Les propriétés thermo-optiques sont :
αs = 0,11, ε = 0,79, transmission du revêtement entre 200 et 1000 nm = 99%.

### EXEMPLE 4

Le mélange obtenu à partir de polydiéthoxysiloxane (3 parties en poids), de polydiméthylsiloxane avec terminaisons silanol (7 parties en poids), de méthyltriméthoxysilane (4 parties en poids) et de diacétate de dibutyl-étain (0,002 partie en poids) est appliqué, au pistolet, sur un substrat formé de MYLAR aluminisé, en une épaisseur de 50 micromètres.

Les propriétés thermo-optiques sont :
αs = 0,10, ε = 0,85, transmission du revêtement entre 200 et 1000 nm = 99,5%.

### EXEMPLE 5

Le mélange obtenu à partir de polydiéthoxysiloxane (3 parties en poids), de polydiméthylsiloxane avec terminaisons silanol (4 parties en poids), de tétraéthoxysilane (4 parties en poids) et de diacétate de dibutyl-étain (0,002 partie en poids) est appliqué, au pistolet, sur un substrat
formé de KAPTON aluminisé, en une épaisseur de 50 micromètres.

Les propriétés thermo-optiques sont :
αs = 0,10, ε = 0,85, transmission du revêtement entre 200 et 1000 nm = 99,5%.

### EXEMPLE 6

Le mélange obtenu à partir de polydiéthoxysiloxane (3 parties en poids), de polydiméthylsiloxane avec terminaisons silanol (7 parties en poids), de diméthyldiéthoxysilane (4 parties en poids) et de diacétate de dibutyl-étain (0,002 partie en poids) est appliqué, au pistolet, sur un substrat
formé de KAPTON aluminisé, en une épaisseur de 50 micromètres.

Les propriétés thermo-optiques sont :
αs = 0,10, ε = 0,79, transmission du revêtement entre 200 et 1000 nm = 99,5%.

### EXEMPLE 7

Le mélange obtenu à partir de polydiéthoxysiloxane (3 parties en poids), de polydiméthylsiloxane avec terminaisons silanol (7 parties en poids), de méthyltriéthoxysilane (4 parties en poids) et de diacétate de dibutyl-étain (0,002 partie en poids) est appliqué, au pistolet, sur un substrat
formé de KAPTON aluminisé, en une épaisseur de 50 micromètres.

Les propriétés thermo-optiques sont :
αs = 0,11, ε = 0,79, transmission du revêtement entre 200 et 1000 nm = 99%,

### EXEMPLE 8

Le mélange obtenu à partir de polydiéthoxysiloxane (3 parties en poids), de polydiméthylsiloxane avec terminaisons silanol (7 parties en poids), de méthyltriméthoxysilane (4 parties en poids) et de diacétate de dibutyl-étain (0,014 partie en poids) est appliqué, au pistolet, sur un substrat
formé de KAPTON aluminisé, en une épaisseur de 50 micromètres.

Les propriétés thermo-optiques sont :
αs = 0,11, ε = 0,82, transmission du revêtement entre 200 et 1000 nm = 99%.

### EXEMPLE 9

Le mélange obtenu à partir de polydiéthoxysiloxane (3 parties en poids), de méthyltriméthoxysilane (4 parties en poids) et de diacétate de dibutyl-étain (0,001 partie en poids) est appliqué, au pistolet, sur un substrat formé de KAPTON aluminisé, en une épaisseur de 50 micromètres.

Les propriétés thermo-optiques sont :
αs = 0,10, ε = 0,75, transmission du revêtement entre 200 et 1000 nm = 99%.

### EXEMPLE 10

Le mélange obtenu à partir de polydiméthylsiloxane avec terminaisons silanol (7 parties en poids), de méthyltriméthoxysilane (4 parties en poids) et de diacétate de dibutyl-étain (0,001 partie en poids) est appliqué, au pistolet, sur un substrat formé de KAPTON aluminisé, en une épaisseur de 50 micromètres.

Les propriétés thermo-optiques sont :
αs = 0,11, ε = 0,70, transmission du revêtement entre 200 et 1000 nm = 98%.

### EXEMPLE 11

Le mélange obtenu à partir de polydiéthoxysiloxane (3 parties en poids), de polydiméthylsiloxane avec terminaisons silanol (7 parties en poids), de tétraéthoxysilane (4 parties en poids) et de tétraoctyl-étain (0,03 partie en poids) est appliqué, au pistolet, sur un substrat formé de KAPTON aluminisé, en une épaisseur de 50 micromètres.

Les propriétés thermo-optiques sont :
αs = 0,10, ε = 0,80, transmission du revêtement entre 200 et 1000 nm = 99%.

### EXEMPLE 12

Le mélange obtenu à partir de polydiéthoxysiloxane (3 parties en poids), de polydiméthylsiloxane avec terminaisons silanol (7 parties en poids), de méthyltriméthoxysilane (4 parties en poids) et de titanate de tétraéthyle (0,014 partie en poids) est appliqué, au pistolet, sur un substrat formé d'aluminium poli, en une épaisseur de 50 micromètres.

Les propriétés thermo-optiques sont :
αs = 0,12, ε = 0,80, transmission du revêtement entre 200 et 1000 nm = 98,5%.

### EXEMPLE 13

Le mélange obtenu à partir de polydiéthoxysiloxane (3 parties en poids), de polydiméthylsiloxane avec terminaisons silanol (7 parties en poids), de méthyltriméthoxysilane (4 parties en poids) et de n-butoxyde de titane (0,07 partie en poids) est appliqué, au pistolet, sur un substrat formé de KAPTON, en une épaisseur de 50 micromètres.

Les propriétés thermo-optiques sont :
αs = 0,11, ε = 0,75, transmission du revêtement entre 200 et 1000 nm = 99%.

### EXEMPLE 14

Le mélange obtenu à partir de polydiéthoxysiloxane (3 parties en poids), de polydiméthylsiloxane avec terminaisons silanol (7 parties en poids), de polydiméthylsiloxane avec terminaisons aminopropyle (0,007 partie en poids) et de méthyltriméthoxysilane (4 parties en poids) est appliqué, au pistolet, sur un substrat formé de KAPTON aluminisé, en une épaisseur de 50 micromètres.

Les propriétés thermo-optiques sont :
αs = 0,10, ε = 0,80, transmission du revêtement entre 200 et 1000 nm = 99%.

### EXEMPLE 15

Le mélange obtenu à partir de polydiéthoxysiloxane (3 parties en poids), de polydiméthylsiloxane avec terminaisons aminopropyle (7 parties en poids) et de méthyltriméthoxysilane (4 parties en poids) est appliqué, au pistolet, sur un substrat formé de KAPTON aluminisé, en une épaisseur de 50 micromètres.

Les propriétés thermo-optiques sont :
αs = 0,10, ε = 0,82, transmission du revêtement entre 200 et 1000 nm = 99%.

### EXEMPLE 16

Le mélange obtenu à partir de polydiéthoxysiloxane (3 parties en poids), de polydiméthylsiloxane avec terminaisons silanol (7 parties en poids), de polydiméthylsiloxane avec terminaisons aminopropyle (2 parties en poids) et de méthyltriméthoxysilane (4 parties en poids) est appliqué, au pistolet, sur un substrat formé de KAPTON aluminisé, en une épaisseur de 50 micromètres.

Les propriétés thermo-optiques sont :
αs = 0,11, ε = 0,84, transmission du revêtement entre 200 et 1000 nm = 98,5%.

### EXEMPLE 17

Le mélange obtenu à partir de polydiéthoxysiloxane (3 parties en poids), de polydiméthylsiloxane avec terminaisons silanol (7 parties en poids), de polydiméthylsiloxane avec terminaisons aminopropyle (2 parties en poids) et de tétraméthyldiéthoxydisiloxane (4 parties en poids) est appliqué, au pistolet, sur un substrat formé de KAPTON aluminisé, en une épaisseur de 50 micromètres.

Les propriétés thermo-optiques sont :
αs = 0,11, ε = 0,83, transmission du revêtement entre 200 et 1000 nm = 98%.

### EXEMPLE 18

Le mélange obtenu à partir de polydiéthoxysiloxane (2,5 parties en poids), de méthyltriméthoxysilane (7,5 parties en poids) et de diméthoxydibutyl-étain (0,005 partie en poids) est appliqué, au pistolet, sur un substrat formé de KAPTON aluminisé, en une épaisseur de 50 micromètres.

Les propriétés thermo-optiques sont :
αs = 0,10, ε = 0,79, transmission du revêtement entre 200 et 1000 nm = 99%.

### EXEMPLE 19

Le mélange obtenu à partir de polydiéthoxysiloxane (3 parties en poids), de polydiméthylsiloxane avec terminaisons éthoxy (3,5 parties en poids), de polydiméthylsiloxane avec terminaisons silanol (3,5 parties en poids) et de diméthoxydibutyl-étain (0,005 partie en poids) est appliqué, au pistolet, sur un substrat formé de KAPTON aluminisé, en une épaisseur de 50 micromètres.

Les propriétés thermo-optiques sont :
αs = 0,10, ε = 0,80, transmission du revêtement entre 200 et 1000 nm = 99,5%.

### EXEMPLE 20

Le mélange obtenu à partir de polydiéthoxysiloxane (3 parties en poids), de polydiméthylsiloxane avec terminaisons éthoxy (3 parties en poids), de polydiméthylsiloxane avec terminaisons aminopropyle (3 parties en poids) et de méthyltriméthoxysilane (4 parties en poids) est appliqué, au pistolet, sur un substrat formé de KAPTON aluminisé, en une épaisseur de 50 micromètres.

Les propriétés thermo-optiques sont :
αs = 0,11, ε = 0,85, transmission du revêtement entre 200 et 1000 nm = 99%.

### EXEMPLE 21

Le mélange obtenu à partir de polydiéthoxysiloxane (3 parties en poids), de polydiméthylsiloxane avec terminaisons éthoxy (1 partie en poids), de polydiméthylsiloxane avec terminaisons méthoxy (6 parties en poids) de polydiméthylsiloxane avec terminaisons aminopropyle (0,25 partie en poids) de méthyltriméthoxysilane (4 parties en poids) et de diméthoxydibutyl-étain (0,005 partie en poids) est appliqué, au pistolet, sur un substrat formé de KAPTON aluminisé, en une épaisseur de 50 micromètres.

Les propriétés thermo-optiques sont :
αs = 0,11, ε = 0,75, transmission du revêtement entre 200 et 1000 nm = 98%.

### EXEMPLE 22

Du polysilsesquioxane à groupements fonctionnels hydroxyle est appliqué, au pistolet, en une couche de 50 micromètres, sur un substrat formé d'aluminium poli de 30 micromètres d'épaisseur, puis polymérisé à 225°C pendant 4 heures.

Les propriétés thermo-optiques sont :
αs = 0,10, ε = 0,85, transmission du revêtement entre 200 et 1000 nm = 99%.

La réaction peut se dérouler par exemple, comme suit :

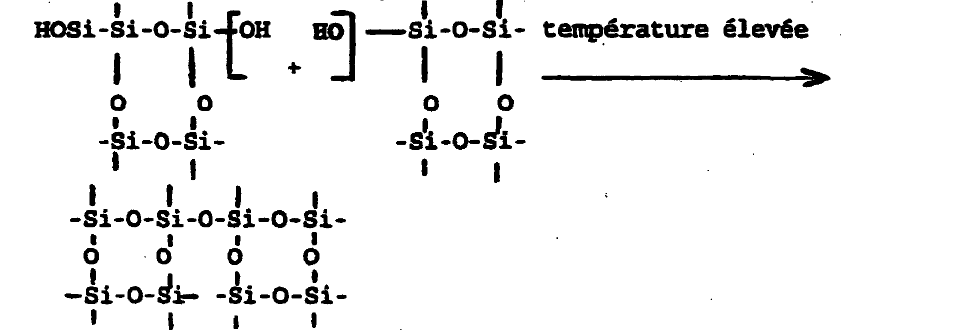

### EXEMPLE 23

Le mélange obtenu à partir de polysilsesquioxane à groupements fonctionnels hydroxyle (20 parties en poids) et de polydiméthylsiloxane avec terminaisons silanol (1 partie en poids) est appliqué, au pistolet, sur un substrat formé de KAPTON aluminisé, en une épaisseur de 50 micromètres, puis polymérisé à 225°C pendant 4 heures.

Les propriétés thermo-optiques sont :
αs = 0,11, ε = 0,80, transmission du revêtement entre 200 et 1000 nm = 99%.

### EXEMPLE 24

Le mélange obtenu à partir de polysilsesquioxane à groupements fonctionnels hydroxyle (20 parties en poids) et de méthyltriméthoxysilane (1 partie en poids) est appliqué, au pistolet, sur un substrat formé de KAPTON aluminisé, en une épaisseur de 50 micromètres, puis polymérisé à 220°C pendant 4 heures.

Les propriétés thermo-optiques sont :
αs = 0,10, ε = 0,82, transmission du revêtement entre 200 et 1000 nm = 98%.

Les chaînes linéaires proviennent de la copolymérisation du polysilsesquioxane à fonctions hydroxyles et du méthyltriméthoxysilane comme indiqué ci-dessous :

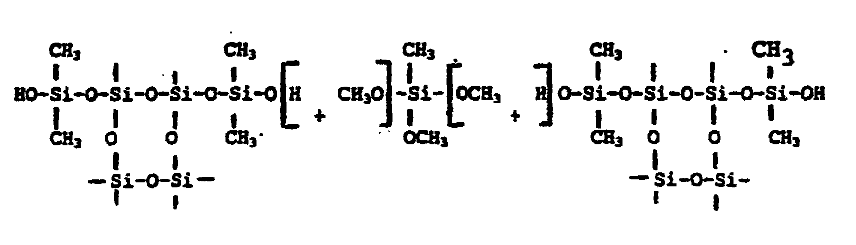

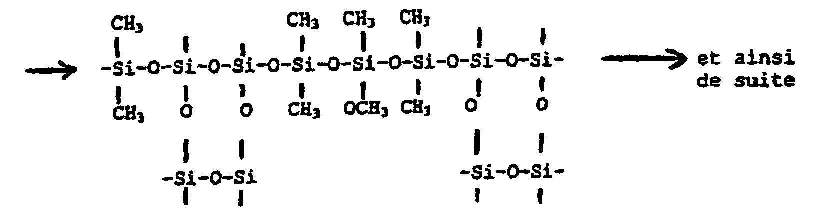

### EXEMPLE 25

Le mélange obtenu à partir de polysilsesquioxane à groupements fonctionnels hydroxyle (20 parties en poids) et de polysiloxanes à structure tridimensionnelle et groupe fonctionnel hydroxyle (1 partie en poids ; disponible auprès de la Société GELEST INC., sous la désignation MTV-124) est appliqué, au pistolet, sur un substrat formé de KAPTON aluminisé, en une épaisseur de 50 micromètres, puis polymérisé à 225°C pendant 4 heures.

Les propriétés thermo-optiques sont :
αs = 0,11, ε = 0,85, transmission du revêtement entre 200 et 1000 nm = 99%.

### EXEMPLE 26

Le mélange obtenu à partir de polysilsesquioxane à groupement fonctionnel hydrogène (20 parties en poids), de polydiméthylvinylsiloxane (1 partie en poids) et de complexe cyclovinylméthylsiloxane platinique (0,001 partie en poids) est appliqué, au pistolet, sur un substrat formé de KAPTON aluminisé, en une épaisseur de 50 micromètres.

Les propriétés thermo-optiques sont :
αs = 0,10, ε = 0,78, transmission du revêtement entre 200 et 1000 nm = 98,5%.

### EXEMPLE 27

Le mélange obtenu à partir de polysilsesquioxane à groupement fonctionnel hydrogène (20 parties en poids), de polysiloxane à structure tridimensionnelle et groupement vinylique (1 partie en poids; disponible auprès de la Société GELEST INC. sous la désignation VTT-116) et de complexe cyclovinylméthylsiloxane platinique (0,001 partie en poids) est appliqué, au pistolet, sur un substrat formé de KAPTON aluminisé, en une épaisseur de 50 micromètres.

Les propriétés thermo-optiques sont :
αs = 0,11, ∈ = 0,83, transmission du revêtement entre 200 et 1000 nm = 99%.

## Revendications

1. Matériau de revêtement pour le contrôle thermique comportant une couche réflectrice métallique supportée ou non par un substrat, la couche réflectrice métallique étant revêtue d'une couche protectrice transparente en polysiloxane, **caractérisé en ce que** la structure de la couche protectrice est constituée de blocs bi- ou tridimensionnels reliés entre eux par des chaînes linéaires ou par des groupes de liaison, ladite couche protectrice étant exempte de groupements chromophores susceptibles d'absorber dans l'ultra-violet au-dessus de 170 nm.

2. Matériau selon la revendication 1, **caractérisé en ce que** le substrat est flexible.

3. Matériau selon la revendication 1, **caractérisé en ce que** le substrat est rigide.

4. Matériau selon l'une quelconque des revendications 1 à 3, **caractérisé en ce que** ladite couche protectrice transparente a une transmission d'au moins 98% entre 200 et 1000 nm.

5. Matériau selon l'une quelconque des revendications 1 à 4, **caractérisé en ce qu'**il présente un coefficient d'absorption solaire inférieur ou égal à 0,12.

6. Matériau selon l'une quelconque des revendications 1 à 4, **caractérisé en ce qu'**il présente un facteur d'émissivité infra-rouge au moins égal à 0,70.

7. Matériau selon la revendication 6, **caractérisé en ce que** ledit facteur est au moins égal à 0,80.

## Patentansprüche

1. Beschichtungsmaterial für die Wärmeregulierung, das eine metallische Reflexionsschicht auf einem Substrat oder ohne einen Träger umfasst, wobei die metallische Reflexionsschicht mit einer transparenten Schutzschicht aus Polysiloxan beschichtet ist, **dadurch gekennzeichnet, dass** die Struktur der Schutzschicht aus zwei- oder dreidimensionalen Blöcken besteht, die untereinander durch lineare Ketten oder Verknüpfungsgruppen verbunden sind, wobei die Schutzschicht frei von chromophoren Gruppen ist, die im ultravioletten Bereich oberhalb von 170 nm absorbieren können.

2. Material gemäß Anspruch 1, **dadurch gekennzeichnet, dass** das Substrat flexibel ist.

3. Material gemäß Anspruch 1, **dadurch gekennzeichnet, dass** das. Substrat starr ist.

4. Material gemäß einem der Ansprüche 1 bis 3, **dadurch gekennzeichnet, dass** die transparente Schutzschicht zwischen 200 und 1000 nm eine Transmission von wenigstens 98% hat.

5. Material gemäß einem der Ansprüche 1 bis 4, **dadurch gekennzeichnet, dass** es einen solaren Absorptionskoeffizienten von kleiner oder gleich 0,12 aufweist.

6. Material gemäß einem der Ansprüche 1 bis 4, **dadurch gekennzeichnet, dass** es einen Infrarotemissionsfaktor von wenigstens 0,70 aufweist.

7. Material gemäß Anspruch 6, **dadurch gekennzeichnet, dass** der genannte Faktor wenigstens 0,80 beträgt.

## Claims

1. A thermal control coating material comprising a metal reflecting layer optionally supported by a substrate, wherein said metal reflecting layer is coated with a transparent protective layer made of a polysiloxane, **characterized in that** the structure of the protective layer consists of two-dimensional or three-dimensional blocks connected together by linear chains or by linking groups, said protective layer being free of chromophore groups capable of absorbing in the ultraviolet band above 170 nm.

2. The material claimed in claim 1, **characterized in that** said substrate is flexible.

3. The material claimed in claim 1, **characterized in that** said substrate is rigid.

4. The material claimed in any of claims 1 to 3, **characterized in that** said transparent protective layer has a transmission in the range 200 nm to 1 000 nm of at least 98%.

5. A material as claimed in any of claims 1 to 4, **characterized in that** it has a solar absorption coefficient less than or equal to 0.12.

6. A material as claimed in any of claims 1 to 4, **characterized in that** it has an infrared emissivity factor of at least 0.70.

7. The material claimed in claim 6, **characterized in that** said factor is at least 0.80.
